# EUROPÄISCHE PATENTSCHRIFT

(11) **EP 2 153 078 B1**
(45) Veröffentlichungstag und Bekanntmachung des Hinweises auf die Patenterteilung: **13.01.2016**
(21) Anmeldenummer: 08759590.6
(22) Anmeldetag: 14.05.2008
(51) Int. Cl.: F04D 13/06, F04D 29/047

(54) **NASSLÄUFERMOTOR**
WET ROTOR MOTOR
MOTEUR À ROTOR HUMIDE

(30) Priorität: 31.05.2007 DE 102007025403
(43) Veröffentlichungstag der Anmeldung: 17.02.2010
(73) Patentinhaber: BSH Hausgeräte GmbH, 81739 München (DE)
(72) Erfinder: KALAVSKY, Michal, 040 23 Kosice (SK)
(86) Internationale Anmeldenummer: PCT/EP2008/055909
(87) Internationale Veröffentlichungsnummer: WO 2008/145520

(56) Entgegenhaltungen:
- DE-B- 1 098 820
- FR-A- 1 598 119

## Beschreibung

Die Erfindung bezieht sich auf einen Nassläufermotor aufweisend ein Lagerschild zur Lagerung einer Welle, wobei das Lagerschild eine Aufnahme für ein Wellenlager aufweist, die das Wellenlager an seiner äußeren Mantelfläche umgibt.

In verschiedenen Geräten, insbesondere Haushaltsgeräten, werden Nassläufermotoren eingesetzt, beispielsweise als Antriebsmotoren für Pumpen. Bei solchen Pumpen kann in den Rotorraum des Antriebsmotors ein Teil der zu pumpenden Flüssigkeit eindringen, so dass der Rotor des Antriebsmotors in dieser Flüssigkeit läuft. Diese Flüssigkeit kann auch dazu genutzt werden, das bzw. die Wellenlager zu schmieren. Trotzdem kann es vorkommen, dass in dem Rotorraum bzw. im Bereich des Wellenlagers Luft verbleibt, so dassdas Wellenlager trocken läuft, was zu einem erhöhten Verschleiß des Wellenlagers führt.

In der Auslegeschrift DE 1 098 820 ist eine mehrstufige Kreiselpumpe mit mehreren Pumpenrädern offenbart, bei der ein Teil des Pumpmediums in den Rotorraum eintritt. Von dem Rotorraum gelangt die Flüssigkeit durch einen Kanal im pumpenfernen hinteren Lagerschild in einen Hohlkanal der Welle, der über einen seitlichen Ausgang in das zweites Pumpenrad mündet. Die Flüssigkeit durchsetzt auch das pumpenferne Lager der Welle, wodurch dieses geschmiert wird. Allerdings ist es kostspielig eine Welle mit einem Hohlkanal auszubilden. Des weiteren muss in diesem Fall genügend Flüssigkeit in den Rotorraum nachströmen, damit die durch den Hohlkanal der Welle abfließende Flüssigkeit ersetzt.wird und das Wellenlager nicht trocken läuft. Dadurch ist wiederum die Wahrscheinlichkeit erhöht, dass Schmutzpartikel des Pumpmediums mit der Flüssigkeit in den Rotorraum gelangen und dort Blockaden bzw. Schäden verursachen.

Der vorliegenden Erfindung liegt die Aufgabe zugrunde, einen kostengünstigen Nassläufermotor mit hoher Lebensdauer zur Verfügung zu stellen.

Gelöst wird die vorstehend aufgezeigte Aufgabe durch einen Nassläufermotor, mit den Merkmalen des Anspruchs 1. Vorteilhafte sowie bevorzugte Ausgestaltungen der Erfindung sind Gegenstand der abhängigen Ansprüche.

Bei einem Nassläufermotor der eingangs genannten Art, weist erfindungsgemäß die Aufnahme für das Wellenlager mehrere Segmente auf, die derart ringförmig nebeneinander angeordnet sind, dass jeweils zwischen zwei nebeneinander angeordneten Segmenten ein Kanal gebildet ist, der von einem Fluid durchströmbar ist. Insbesondere sind die Segmente mit einem Abstand zwischen einander angeordnet, wobei der Abstand die Breite des Kanals definiert. Je nach Anzahl der Segmente können mehrere Kanäle gebildet werden, durch die das Fluid, das insbesondere eine Flüssigkeit ist, bis zu dem Wellenlager bzw. der Welle vordringen kann, wodurch die Zuverlässigkeit der Schmierung und/oder der Kühlung des Wellenlagers bzw. der Welle verbessert wird. Diese kann auch durch die Anzahl und den Abstand zwischen zwei nebeneinander angeordneten Segmenten auf einfache und kostengünstige Weise an den jeweiligen Anwendungsfall angepasst werden. Darüber hinaus ist die Umströmung des Wellenlagers bzw. der Welle auch bei Wellen gewährleistet, die keine Hohlwellen sind bzw. die keine Durchbohrung aufweisen.

Das Lagerschild wird zur Lagerung der Welle des Nassläufermotors eingesetzt. Der Nassläufermotor weist einen Rotorraum auf, in dem sich der Rotor des Nassläufermotors in dem Fluid dreht, und der von einem Rotorgehäusemantel und dem erfindungsgemäßen Lagerschild begrenzt ist. Vorteilhafterweise ist der Kanal zu dem Rotorraum hin offen, so dass das Fluid, das insbesondere mit dem Rotor des Nassläufers in dem Rotorraum rotiert und das das Lagerschild erreicht, von dem Rotorraum in den Kanal eindringen kann.

Gemäß einer bevorzugten Ausführungsform ist der Kanal, insbesondere über seine gesamte Breite, zu dem Wellenlager hin offen. Auf diese Weise wird das Wellenlagers zumindest in Teilbereichen seiner Außenfläche von dem Fluid umspült, so dass das Wellenlager durch das Fluid besonders gut gekühlt und/oder geschmiert werden kann.

Der Kanal ist insbesondere in Form einer Nut ausgebildet, wobei durch jedes der zwei nebeneinander angeordneten Segmente jeweils eine Nutwange der Nut gebildet ist. Vorzugsweise erstreckt sich der Kanal in Bezug auf die Welle in radialer Richtung und/oder axialer Richtung über die gesamte Ausdehnung der zwei nebeneinander angeordneten Segmente. Da die Segmente an einer der Welle zugewandten Innenwand des Lagerschildes angeordnet sind, kann diese Innenwand daher einen Nutgrund der Nut bilden. Die Nut kann einen beliebig geformten Querschnitt aufweisen. Vorteilhafterweise ist der Querschnitt so groß gewählt, dass der Strömungswiderstand für das Fluid gering ist, so dass zur Kühlung des Wellenlagers und/oder der Welle ein genügender Wärmeabtransport durch das Fluid gewährleistet ist.

Gemäß einer bevorzugten Ausführungsform ist ein zwischen Wellenende und Lagerschild und/oder zwischen Wellenlager und Lagerschild gebildeter Zwischenraum, der insbesondere durch die Segmente begrenzt ist, mit dem Kanal verbunden. Auf diese Weise ist der Zwischenraum von dem Fluid durchströmbar, wodurch eine Entlüftung des Zwischenraumes möglich ist. Zusätzlich kann auch das Wellenlager und/oder die Welle von dem Zwischenraum aus gut durch das Fluid gekühlt und/oder geschmiert werden.

Vorzugsweise sind durch die Segmente mehrere Kanäle gebildet, wobei zumindest einer der Kanäle ein Einlasskanal ist, der für das Fluid als Einlass in den Zwischenraum dient, und wobei zumindest einer der Kanäle ein Auslasskanal ist, der für das Fluid als Auslass aus dem Zwischenraum dient. Dabei ist der Auslasskanal insbesondere fluchtend zu dem Einlasskanal angeordnet. Das bedeutet auch, dass in Bezug auf das Wellenlager der Einlasskanal und der Auslasskanal gegenüberliegend angeordnet sind. Durch diese Anordnung ist der Strömungswiderstand besonders gering und Turbulenzen des Fluids werden in dem Zwischenraum reduziert, so dass das Fluid den Zwischenraum ungehindert durchströmen kann. Auf diese Weise wird der Durchfluss des Fluids durch den Zwischenraum verbessert und Luft, die sich möglicherweise in dem Zwischenraum befindet, wird von dem Fluid verdrängt. D. h. die Entlüftung des Zwischenraums ist gewährleistet, wodurch ein Trockenlaufen des Wellenlagers vermieden wird. Des weiteren wird durch das Durchspülen des Zwischenraums auch der Abtransport von Wärme verbessert, d.h. ein Heißlaufen des Wellenlager bzw. der Welle wird verhindert.

Durch die Anzahl der Kanäle und deren Anordnung bzw. deren Querschnitt kann die Entlüftung des Zwischenraums und/oder die Kühlung und/oder die Schmierung des Wellenlagers und/oder der Welle auf einfache und kostengünstige Weise an den jeweiligen Anwendungsfall angepasst werden. Als vorteilhaft hat sich für die Anwendung des Lagerschildes bei einer Pumpe für Haushaltsgeräte eine Aufnahme des Wellenlagers herausgestellt, die vier Segmenten aufweist, wobei durch die vier Segmente vier Kanäle gebildet sind, und wobei einer der vier Kanäle der Einlasskanal ist und die anderen drei Kanäle Auslasskanäle sind.

An dem Lagerschild und/oder an zumindest einem der den Einlasskanal bildenden Segmente kann ein Umlenkelement angeordnet, insbesondere angeformt sein, das zur Umlenkung des Fluids in den Einlasskanal dient. Das Umlenkelement ist bevorzugt an die Strömungsrichtung des Fluids im Rotorraum angepasst, so dass eine verbesserte Durchspülung des Zwischenraums zwischen Welle bzw. Wellenlager und Lagerschild erzeugt wird. Dies verbessert wiederum die Entlüftung des Zwischenraums, sowie die Kühlung bzw. Schmierung des Wellenlagers und der Welle. Insbesondere erstreckt sich das Umlenkelement von einem Rand des Lagerschildes, an dem der Rotorgehäusemantel an das Lagerschild anschließt, bis zu dem Einlasskanal. Wenn der Rotorraum nicht vollständig sondern nur teilweise mit dem Fluid gefüllt ist, wird das mit dem Rotor rotierende Fluid aufgrund der Zentrifugalkraft nach außen an den Rotorgehäusemantel gedrückt. Von dort wird zumindest ein Teil des Fluids durch das Umlenkelement in den Einlasskanal gelenkt. Somit wird auch in diesem Fall das Wellenlager mit genügend Schmierflüssigkeit versorgt, so dass ein Trockenlaufen des Wellenlagers vermieden wird.

Wird das Lagerschild bei einem Nassläufermotor eingesetzt, der in beiden Drehrichtungen des Rotors betrieben wird, so kann das Fluid in dem von dem Lagerschild begrenzten Rotorraum in beiden Drehrichtungen des Rotors rotieren. Daher hat es sich in diesem Fall als vorteilhaft erwiesen, das Umlenkelement an dem Lagerschild mittig zu dem Einlasskanal anzuordnen. Bevorzugt ist zusätzlich an zumindest einem der den Einlasskanal bildenden Segmente ein Führungselement angeordnet, insbesondere abgeformt, das zur Leitung des Fluids in den Einlasskanal dient. Auf diese Weise wird für beide Drehrichtungen ein Anteil des Fluids durch das Umlenkelement umgelenkt und über das Führungselement in den Einlasskanal geleitet.

Vorzugsweise weist das Umlenkelement zumindest eine gekrümmte Prallwand zur Umlenkung des Fluids auf. Diese Prallwand ist je nach Anwendungsfall derart ausgebildet, dass das Fluid entlang einer konvexen oder konkaven Fläche der Prallwand in den Einlasskanal geleitet wird. Dadurch werden Turbulenzen des Fluids vor oder in dem Einlasskanal weitestgehend vermieden, so dass das Fluid ungehindert in und durch den Einlasskanal strömen kann.

Es ist auch möglich, die Segmente derart auszubilden, dass sie zur Befestigung des Wellenlagers dienen. Insbesondere weisen die Segmente auf ihrer dem Wellenlager zugewandten Seite eine Einkerbung zur Aufnahme eines Klemmrings auf, durch welchen das Wellenlager in der durch die Segmente gebildete Aufnahme befestigbar ist. Dieser Klemmring kann insbesondere als O-Ring ausgebildet sein. Auf diese Weise ist eine besonders einfache und kostengünstige Montage des Wellenlagers, das insbesondere als Gleitlager ausgebildet ist, in dem Lagerschild möglich.

Besonders einfach und kostengünstig gestaltet sich die Montage, wenn die Segmente an dem Lagerschild angeformt sind. Auf diese Weise kann das Lagerschild mit den Segmenten beispielsweise durch ein Spritzguss-, ein Press- oder ein Gussverfahren gefertigt werden. Es ist allerdings auch in einer alternativen Ausführungsform möglich, die Segmente an dem Lagerschild zu befestigen, z. B. durch Rast-, Kleb- oder Schweißverbindungen.

Das Lagerschild: kann auch mit dem Rotorgehäuse des Nassläufermotors bzw. der Pumpe einstückig ausgebildet sein. Beispielsweise in Form eines topfförmigen Lagerschilds. Dies hat den Vorteil, dass keine Dichtungen zwischen dem Lagerschild und dem Rotorgehäuse nötig sind, wodurch sich die Anzahl der Bauteile und damit die Fertigungskosten des Nassläufermotors bzw. der Pumpe reduzieren.

Bei einem Nassläufermotor mit einer anzutreibenden Einheit, wie beispielsweise einer Pumpe, wird das erfindungsgemäße Lagerschild bevorzugt für die Lagerung desjenigen Wellenendes eingesetzt, das der anzutreibenden Einheit abgewandt ist. Ist die anzutreibende Einheit beispielsweise eine Pumpe, so wird also bevorzugt das pumpenabgewandte Wellenende in dem erfindungsgemäßen Lagerschild gelagert. In diesem Fall kann das Lagerschild geschlossen, d.h. ohne Durchbruch für die Welle ausgebildet werden.

Generell kann bei verschiedensten Geräten, insbesondere bei Haushaltsgeräten, durch Verwendung des erfindungsgemäßen Lagerschildes die Lebensdauer von Nassläufermotoren verlängert werden. Eine Pumpe mit dem erfindungsgemäßen Lagerschild kann beispielsweise bei einer Waschmaschine oder einer Geschirrspülmaschine eingesetzt werden.

Es wird darauf hingewiesen, dass die Merkmale der Unteransprüche ohne Abweichung von der erfindungsgemäßen Idee in beliebiger Weise miteinander und mit den Merkmalen des bzw. der unabhängigen Ansprüche kombinierbar sind.

Ausführungsbeispiele der Erfindung werden nachstehend anhand der Zeichnung näher erläutert:
- Fig. 1: zeigt eine schematische Schnittansicht durch einen Nassläufermotor einer Pumpe mit einem Lagerschild gemäß einem erfindungsgemäßen Ausführungsbeispiel,
- Fig. 2: zeigt eine Ansicht des Rotorraums des Nassläufermotors gemäß Figur 1 schräg von der Pumpenkammer aus mit einer ersten Ausführungsform des Lagerschildes,
- Fig. 3: zeigt eine schematische Draufsicht auf den Rotorraum gemäß Figur 2 mit durch Pfeile angegebenen Strömungsrichtungen,
- Fig. 4: zeigt eine Ansicht des Rotorraums des Nassläufermotors gemäß Figur 1 schräg von der Pumpenkammer aus mit einer zweiten Ausführungsform des Lagerschildes,
- Fig. 5: zeigt eine schematische Draufsicht auf den Rotorraum gemäß Figur 4 mit durch Pfeile angegebenen Strömungsrichtungen.

Bevor auf die Zeichnungen näher eingegangen wird, sei angemerkt, dass einander entsprechende oder gleiche Elemente bzw. Einzelteile in den Zeichnungsfiguren durch gleiche Bezugszeichen bezeichnet sind.

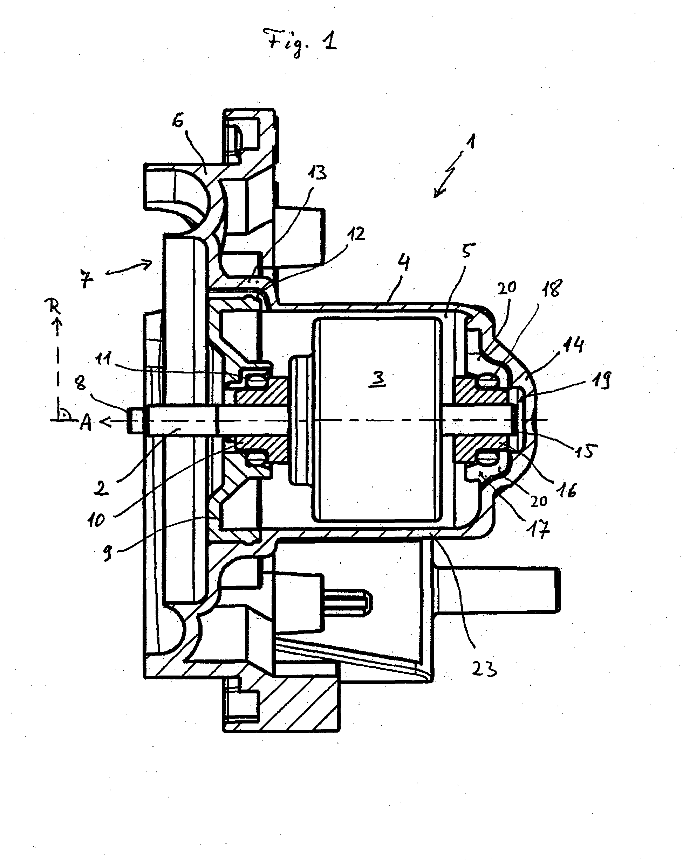

In Fig. 1 ist ein schematischer Querschnitt durch einen Nassläufermotor 1 einer Pumpe gemäß einem Ausführungsbeispiel der Erfindung gezeigt. Der Nassläufermotor 1 weist eine Welle 2 mit einem Rotor 3 auf, der in einem topfförmigen Rotorgehäuse 4 angeordnet ist. Durch die Welle 2 ist eine axiale Richtung A entlang der Achse der Welle 2 und eine radiale Richtung R entlang eines Radius der Welle 2 definiert. Das Rotorgehäuse 4 begrenzt einen Rotorraum 5, in dem sich der Rotor 3 drehen kann. Durch das Rotorgehäuse 4 ist der Rotorraum 5 gegenüber einem Stator (nicht gezeigt) des Nassläufermotors 1 getrennt. Insbesondere ist das Rotorgehäuse 4 gegenüber Flüssigkeiten dicht ausgebildet, so dass eine Flüssigkeit, die sich in dem Rotorraum 5 befindet, den Stator nicht benetzen kann. An dem Rotorgehäuse 4 ist ein Teil des Pumpengehäuses 6 angeformt, das zusammen mit einem Gehäusedeckel (nicht gezeigt) eine Pumpenkammer 7 bildet. In der Pumpenkammer 7 ist üblicherweise ein Pumpenrad (nicht gezeigt) drehbar angeordnet, durch welches eine zu pumpende Flüssigkeit durch die Pumpenkammer 7 gepumpt wird. Das Pumpenrad ist dann in der Pumpenkammer 7 an dem pumpenseitigen Wellenende 8 der Welle 2 befestigt. Zwischen der Pumpenkammer 7 und dem Rotorraum 5 ist ein Lagerträger 9 angeordnet, in dem ein pumpenseitiges Wellenlager 10, in Form eines Gleitlagers, mit Hilfe eines vorderen O-Rings 11 befestigt ist. Die Welle 2 ist in diesem pumpenseitigen Wellenlager 10 gelagert und erstreckt sich durch den Lagerträger 9 hindurch bis in die Pumpenkammer 7. Der Lagerträger 9 ist beispielsweise mit dem Rotorgehäuse 4 verrastet und dichtet den Rotorraum 5 weitestgehend gegenüber Schmutzpartikel der zu pumpenden Flüssigkeit ab.

Während des Pumpvorgangs tritt ein Teil der Flüssigkeit durch das pumpenseitige Wellenlager 10 in den Rotorraum 5 ein. Um den Rotorraum 5 noch weiter zu entlüften, ist zwischen der Pumpenkammer 7 und dem Rotorraum 5 zumindest ein Durchgangskanal 12 vorgesehen. Es können aber auch mehrere Durchgangskanäle 12 vorhanden sein. Dieser Durchgangskanal 12 kann in dem Lagerträger 9, in der Gehäusewand 13 des Rotorgehäuses 4 bzw. des angeformten Pumpengehäuses 6 oder zwischen dem Lagerträger 9 und der Gehäusewand 13 ausgebildet sein. Der Durchgangskanal 12 weist einen geringen Durchmesser bzw. Durchschnitt auf, so dass ein Eintritt von in der Flüssigkeit transportierten Schmutzpartikel in den Rotorraum 5 weitestgehend verhindert wird.

An der pumpenabgewandten Seite des Rotors 3 ist der Rotorraum 5 durch ein an dem Rotorgehäuse 4 angeformtes Lagerschild 14 abgeschlossen. In dem Lagerschild 14 ist das pumpenferne Wellenende 15 der Welle 2 in einem pumpenfernen Wellenlager 16, das beispielsweise ein Gleitlager ist, drehbar gelagert. Dieses Wellenlager 16 ist in einer Aufnahme 17 des Lagerschildes 14 mit einem hinteren O-Ring 18 befestigt. Die Ausgestaltung der Aufnahme,17 wird weiter unten ausführlich erläutert. Zwischen dem pumpenfernen Wellenende 15 und dem Lagerschild 14 bzw. zwischen dem pumpenfernen Wellenlagerschild 16 und dem Lagerschild 14 befindet sich innerhalb der Aufnahme 17 ein Zwischenraum 19. Dieser Zwischenraum 19 ist mit dem Rotorraum 5 über Kanäle 20 verbunden, die im folgenden genauer beschrieben werden.

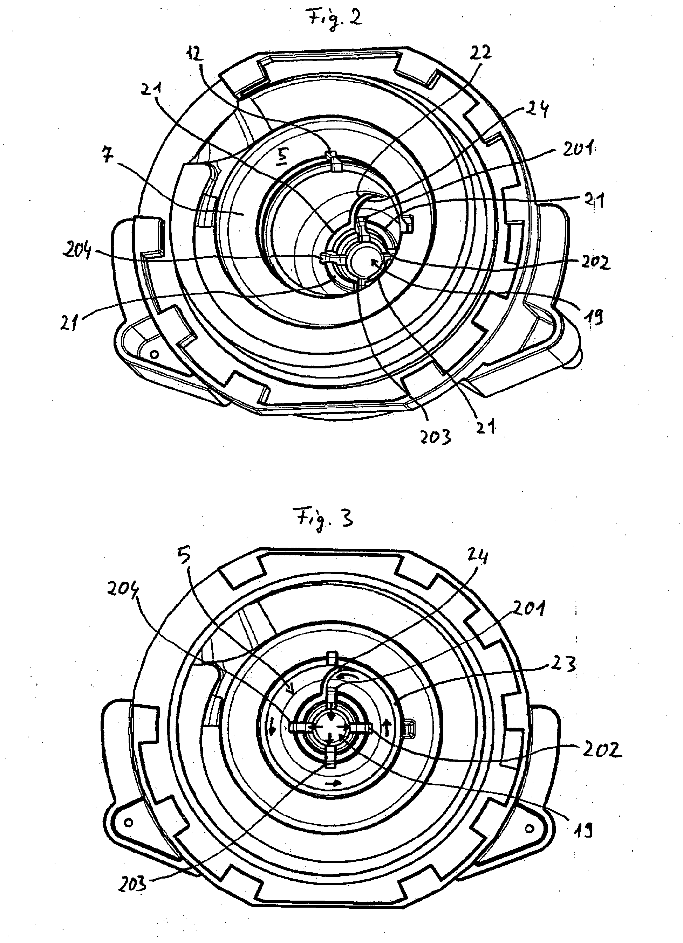

In Fig. 2 ist eine schematische Ansicht des Rotorraums 5 des Nassläufermotors 1 gemäß Figur 1 schräg von der Pumpenkammer 7 aus mit einer ersten Ausführungsform des Lagerschildes 14 gezeigt. Von der Pumpenkammer 7 aus erstreckt sich ein Durchgangskanal 12 in den Rotorraum 5. An dem der Pumpenkammer 7 angewandten Ende des Rotorraums 5 ist an dem Lagerschild 14 die Aufnahme 17 des pumpenfernen Wellenlagers 16 aus vier Segmenten 21 gebildet. Diese vier Segmente 21 sind in Form eines Ringes gruppiert, wobei jeweils zwei Segmente 21 nebeneinander mit einem Abstand zueinander angeordnet sind, so dass zwischen ihnen jeweils ein Kanal 201, 202, 203, 204 ausgebildet ist. An einem der Segmente 21 ist ein gebogenes Umlenkelement 22 angeformt, dass sich von dem Segment 21 über das Lagerschild 14 bis zu dem Mantel 23 des Rotorgehäuses 4 erstreckt.

In Fig. 3 ist eine schematische Draufsicht auf den Rotorraum 5 gemäß Figur 2 mit durch Pfeile angegebenen Strömungsrichtungen gezeigt. Die in den Rotorraum 5 eingedrungene Flüssigkeit rotiert gegen den Uhrzeigersinn und wird durch die Zentrifugalkraft von dem Rotor 3 bzw. der Welle 2 weg an den Mantel 23 des Rotorgehäuses 4 gedrückt. Da das Umlenkelement 22 sich von dem Einlasskanal 201 bis zu dem Rotorgehäuse 4 erstreckt, wird ein Teil der Flüssigkeit über eine konkave Prallwand 24 des Umlenkelements 22 in den Einlasskanal 201 hinein gelenkt. Von dort breitet sich die eindringende Flüssigkeit in den Zwischenraum 19 zwischen Welle 2 und Lagerschild 14 bzw. zwischen Wellenlager 16 und Lagerschild 14 aus. Von dem Zwischenraum 19 aus wird das Wellenlager 16 und auch die Welle 2 durch die Flüssigkeit benetzt und dadurch geschmiert und/oder gekühlt. Durch die über den Einlasskanal 201 weiterhin zugeführte Flüssigkeit wird die Flüssigkeit aus dem Zwischenraum 19 durch die Ausgangskanäle 202, 203, 204 wieder in den Rotorraum 5 gedrückt.

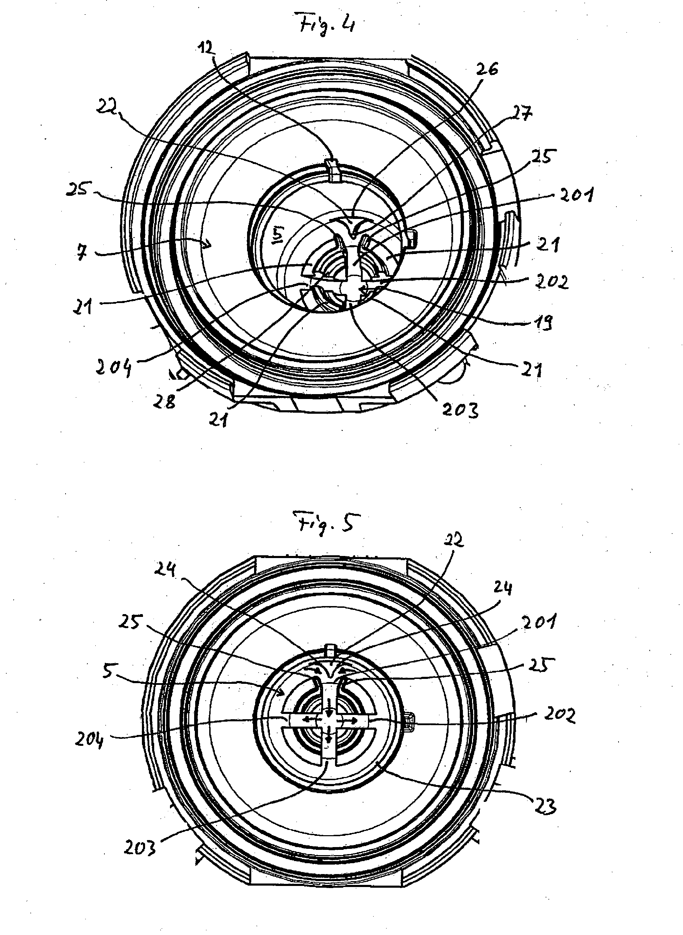

In Fig. 4 ist eine Ansicht des Rotorraums 5 des Nassläufermotors 1 gemäß Figur 1 schräg von der Pumpenkammer 7 aus mit einer zweiten Ausführungsform des Lagerschildes 14 gezeigt. Hier besteht die Aufnahme 17 für das pumpenferne Wellenlager 16 wiederum aus vier Segmenten 21. Die zwischen zwei benachbart angeordneten Segmenten 21 ausgebildeten Kanäle 201, 202, 203 und 204 erstrecken sich sowohl in axialer Richtung A wie auch in radialer Richtung R über die gesamte Ausdehnung der Segmente 21. An den beiden Segmenten 21, die den Einlasskanal 201 bilden, ist jeweils ein Führungselement 25 ausgebildet. Mittig zu dem Einlasskanal 201 ist an dem Lagerschild ein Umlenkelement 22 angeformt, das sich bis zu dem Mantel 23 des Rotorgehäuses 4 erstreckt. Dieses Umlenkelement 22 liegt mit einer breiten Basis 26, die der Krümmung des Rotorgehäuses 4 folgt, an dem Mantel 23 des Rotorgehäuses 4 an. Von den Enden dieser Basis 26 aus laufen zwei konkav gebogene Prallwände 24 aufeinander zu und treffen sich in einer Spitze 27 des Umlenkelements 22, die mittig zwischen den Enden der beiden Führungselemente 25 positioniert ist. Des weiteren weisen die Segmente 21 eine Einkerbung 28 auf, die für die Aufnahme des hinteren O-Rings 18 ausgebildet ist, durch den das pumpenferne Wellenlager 16 in der Aufnahme 17 festgeklemmt werden kann.

In Fig. 5 ist eine schematische Draufsicht auf den Rotorraum gemäß Figur 4 mit durch Pfeile angegebenen Strömungsrichtungen gezeigt. Die in den Rotorraum 5 eingedrungene Flüssigkeit kann entweder mit dem Uhrzeigersinn oder gegen den Uhrzeigersinn rotieren. Für beide Drehrichtungen wird die in den Rotorraum 5 eingedrungene Flüssigkeit durch die Zentrifugalkraft von dem Rotor 3 bzw. der Welle 2 weg an den Mantel 23 des Rotorgehäuses 4 gedrückt. Je nach Drehrichtung prallt die Flüssigkeit auf eine andere der beiden Prallwände 24 des Umlenkelements 22. D.h. die Ausführungsform des Lagerschilds gemäß Figur 4 und 5 ist für einen Nassläufermotor 1 geeignet, der in beiden Drehrichtungen betrieben werden kann. Da das Umlenkelement 22 sich von dem Einlasskanal 201 bis zu dem Rotorgehäuse 4 erstreckt, wird ein Teil der Flüssigkeit über die jeweilige konkave Prallwand 24 des Umlenkelements 22 und über das jeweilige Führungselement 25 in den Einlasskanal 201 hinein gelenkt. Von dort breitet sich die eindringende Flüssigkeit analog zu der Ausführungsform gemäß Figur 2 und 3 in den Zwischenraum 19 zwischen Welle 2 und Lagerschild 14 bzw. zwischen Wellenlager 16 und Lagerschild 14 aus, schmiert und/oder kühlt das Wellenlager 16 bzw. die Welle 2 und verlässt den Zwischenraum 19 durch die Ausgangskanäle 202, 203, 204 wieder.

### Bezugszeichenliste

- 1: Nassläufermotor
- 2: Welle
- 3: Rotor
- 4: Rotorgehäuse
- 5: Rotorraum
- 6: Pumpengehäuse
- 7: Pumpenkammer
- 8: pumpenseitiges Wellenende
- 9: Lagerträger
- 10: pumpenseitiges Wellenlager
- 11: vorderer O-Ring
- 12: Durchgangskanal
- 13: Gehäusewand
- 14: Lagerschild
- 15: pumpenfernes Wellenende
- 16: pumpenfernes Wellenlager
- 17: Aufnahme des pumpenfernen Wellenlagers
- 18: hinterer O-Ring
- 19: Zwischenraum
- 20: Kanal
- 201: Einlasskanal
- 202: Auslasskanal
- 203: Auslasskanal
- 204: Auslasskanal
- 21: Segment
- 22: Umlenkelement
- 23: Mantel des Rotorgehäuses
- 24: Prallwand des Umlenkelements
- 25: Führungselement
- 26: Basis des Umlenkelements
- 27: Spitze des Umlenkelements
- 28: Einkerbung zur Aufnahme des hinteren O-Rings
- A: axiale Richtung
- R: radiale Richtung

## Patentansprüche

1. Nassläufermotor aufweisend ein Lagerschild (14) zur Lagerung einer Welle (2), wobei das Lagerschild (14) eine Aufnahme (17) für ein Wellenlager (16) aufweist, die das Wellenlager (16) an seiner äußeren Mantelfläche umgibt, **dadurch gekennzeichnet, dass** die Aufnahme (17) mehrere Segmente (21) aufweist, die derart ringförmig nebeneinander angeordnet sind, dass jeweils zwischen zwei nebeneinander angeordneten Segmenten (21) ein Kanal (20, 201, 202, 203, 204) gebildet ist, der von dem Fluid durchströmbar ist.

2. Nassläufermotor nach Anspruch 1, **dadurch gekennzeichnet, dass** der Kanal (20, 201, 202, 203, 204), insbesondere über seine gesamte Breite, zu dem Wellenlager (16) hin offen ist.

3. Nassläufermotor nach Anspruch 1 oder 2, **dadurch gekennzeichnet, dass** sich der Kanal (20, 201, 202, 203, 204) in Bezug auf die Welle (2) in radialer Richtung und/oder axialer Richtung über die gesamte Ausdehnung der zwei nebeneinander angeordneten Segmente (21) erstreckt.

4. Nassläufermotor nach einem der vorhergehenden Ansprüche, **dadurch gekennzeichnet, dass** ein zwischen Wellenende (15) und Lagerschild (14) und/oder zwischen Wellenlager (16) und Lagerschild (14) gebildeter Zwischenraum (19), der insbesondere durch die Segmente (21) begrenzt ist, mit dem Kanal (20, 201, 202, 203, 204) verbunden ist.

5. Nassläufermotor nach Anspruch 4, **dadurch gekennzeichnet, dass** durch die Segmente (21) mehrere Kanäle (20, 201, 202, 203, 204) gebildet sind, dass zumindest einer der Kanäle (20) ein Einlasskanal (201) ist, der für das Fluid als Einlass in den Zwischenraum (19) dient, und dass zumindest einer der Kanäle (20) ein Auslasskanal ist (202, 203, 204), der für das Fluid als Auslass aus dem Zwischenraum (19) dient.

6. Nassläufermotor nach Anspruch 5, **dadurch gekennzeichnet, dass** der Auslasskanal (203) fluchtend zu dem Einlasskanal (201) angeordnet ist.

7. Nassläufermotor nach Anspruch 5 oder 6, **dadurch gekennzeichnet, dass** die Aufnahme (17) vier Segmente (21) aufweist, dass durch die vier Segmente (21) vier Kanäle (201, 202, 203, 204) gebildet sind, und dass einer der vier Kanäle (20) der Einlasskanal (201) ist und die anderen drei Kanäle (20) Auslasskanäle (202, 203, 204) sind.

8. Nassläufermotor nach einem der Ansprüche 5 bis 7, **dadurch gekennzeichnet, dass** an dem Lagerschild (14) und/oder an zumindest einem der den Einlasskanal (201) bildenden Segmente (21) ein Umlenkelement (22) angeordnet, insbesondere angeformt ist, das zur Umlenkung des Fluids in den Einlasskanal (201) dient.

9. Nassläufermotor nach Anspruch 8, **dadurch gekennzeichnet, dass** das Umlenkelement (22) an dem Lagerschild (14) mittig zu dem Einlasskanal (201) angeordnet ist.

10. Nassläufermotor nach Anspruch 9, **dadurch gekennzeichnet, dass** an zumindest einem der den Einlasskanal (201) bildenden Segmente (21) ein Führungselement (25) angeordnet, insbesondere angeformt ist, das zur Leitung des Fluids in den Einlasskanal (201) dient.

11. Nassläufermotor nach einem der Ansprüche 8 bis 10, **dadurch gekennzeichnet, dass** das Umlenkelement (22) zumindest eine gekrümmte Prallwand (24) zur Umlenkung des Fluids aufweist.

12. Nassläufermotor nach einem der vorhergehenden Ansprüche, **dadurch gekennzeichnet, dass** die Segmente (21) zur Befestigung des Wellenlagers (16) ausgebildet sind.

13. Nassläufermotor nach Anspruch 12, **dadurch gekennzeichnet, dass** die Segmente (21) auf ihrer dem Wellenlager (16) zugewandten Seite eine Einkerbung (28) zur Aufnahme eines Klemmrings (18) aufweisen, durch welchen das Wellenlager (16) befestigbar ist.

14. Nassläufermotor nach einem der vorhergehenden Ansprüche, **dadurch gekennzeichnet, dass** die Segmente (21) an dem Lagerschild (14) angeformt sind.

15. Nassläufermotor nach einem der vorhergehenden Ansprüche, **dadurch gekennzeichnet, dass** das Lagerschild (14) mit einem Rotorgehäuse (4) einstückig ausgebildet ist.

16. Nassläufermotor nach einem der vorhergehenden Ansprüche, **gekennzeichnet durch** einen Rotorraum (5), der von dem Lagerschild (14) begrenzt ist und zu dem der Kanal (20, 201, 202, 203, 204) hin offen ist.

17. Nassläufermotor nach einem der vorhergehenden Ansprüche, **gekennzeichnet durch** einen an eine Pumpe eines Haushaltsgeräts, insbesondere einer Geschirrspülmaschine angeschlossenen Rotor (3), der sich in dem Fluid in einem Rotorraum (5) dreht, der von einem geschlossenen Lagerschild (14) begrenzt ist, das zur Lagerung der Welle (2) des Rotors (3) die Aufnahme (17) aufweist.

18. Nassläufermotor nach Anspruch 17, **dadurch gekennzeichnet, dass** in dem Lagerschild (14) das pumpenabgewandte Ende (15) der Welle (2) gelagert ist.

## Claims

1. Wet rotor motor having a bearing shield (14) for bearing a shaft (2), wherein the bearing shield (14) has a seat (17) for a shaft bearing (16), which surrounds the shaft bearing (16) on its outer peripheral surface, **characterised in that** the seat (17) has several segments (21), which are arranged annularly adjacent to one another such that a channel (20, 201, 202, 203, 204), through which a fluid can flow, is formed between two adjacently arranged segments (21).

2. Wet rotor motor according to claim 1, **characterised in that** the channel (20, 201, 202, 203, 204), is open toward the shaft bearing (16) in particular across its entire width.

3. Wet rotor motor according to claim 1 or 2, **characterised in that** the channel (20, 201, 202, 203, 204) extends in a radial direction and/or axial direction across the entire extension of the two adjacently arranged segments (21) relative to the shaft (2).

4. Wet rotor motor according to one of the preceding claims, **characterised in that** an interspace (19) formed between shaft end (15) and bearing shield (14) and/or between shaft bearing (16) and bearing shield (14), said interspace being delimited in particular by the segments (21), is connected to the channel (20, 201, 202, 203, 204).

5. Wet rotor motor according to claim 4, **characterised in that** several channels (20, 201, 202, 203, 204) are formed by the segments (21), that at least one of the channels (20) is an inlet channel (201), which is used as an inlet into the interspace (19) for the fluid, and that at least one of the channels (20) is an outlet channel (202, 203, 204), which is used as an outlet from the interspace (19) for the fluid.

6. Wet rotor motor according to claim 5, **characterised in that** the outlet channel (203) is arranged flush with the inlet channel (201).

7. Wet rotor motor according to claim 5 or 6, **characterised in that** the seat (17) has four segments (21), that four channels (201, 202, 203, 204) are formed by the four segments (21), and that one of the four channels (20) is the inlet channel (201) and the other three channels (20) are outlet channels (202, 203, 204).

8. Wet rotor motor according to one of claims 5 to 7, **characterised in that** a deflection element (22) is arranged on, in particular moulded to, the bearing shield (14) and/or at least one of the segments (21) forming the inlet channel (201), said deflection element (22) being used to deflect the fluid into the inlet channel (201).

9. Wet rotor motor according to claim 8, **characterised in that** the deflection element (22) is arranged on the bearing shield (14) centrally relative to the inlet channel (201).

10. Wet rotor motor according to claim 9, **characterised in that** a guide element (25) is arranged on, in particular moulded to, at least one of the segments (21) forming the inlet channel (201), said guide element being used to guide the fluid into the inlet channel (201).

11. Wet rotor motor according to one of claims 8 to 10, **characterised in that** the deflection element (22) has at least one curved baffle wall (24) for deflecting the fluid.

12. Wet rotor motor according to one of the preceding claims, **characterised in that** the segments (21) are embodied so as to fasten the shaft bearing (16).

13. Wet rotor motor according to claim 12, **characterised in that** on its side facing the shaft bearing (16), the segments (21) have a notch (28) for holding a clamping ring (18), by means of which the shaft bearing (16) can be fastened.

14. Wet rotor motor according to one of the preceding claims, **characterised in that** the segments (21) are moulded to the bearing shield (14).

15. Wet rotor motor according to one of the preceding claims, **characterised in that** the bearing shield (14) is embodied in one piece with a rotor housing (4).

16. Wet rotor motor according to one of the preceding claims, **characterised by** a rotor chamber (5), which is delimited by the bearing shield (14) and is open toward the channel (20, 201,202,203,204).

17. Wet rotor motor according to one of the preceding claims, **characterised by** a rotor (3) connected to a pump of a domestic appliance, in particular a dishwasher, said rotor (3) rotating in the fluid in a rotor chamber (5), which is delimited by a closed bearing shield (14), which has the seat (17) for bearing the shaft (2) of the rotor (3).

18. Wet rotor motor according to claim 17, **characterised in that** the end (15) of the shaft (2) facing away from the pump is mounted in the bearing shield (14).

## Revendications

1. Moteur à rotor humide comprenant un flasque (14) destiné à supporter un arbre (2), ledit flasque (14) présentant un logement (17) pour un palier d'arbre (16) qui entoure le palier d'arbre (16) au niveau de sa surface d'enveloppe extérieure, **caractérisé en ce que** le logement (17) présente plusieurs segments (21) juxtaposés en forme d'anneau, de sorte qu'un canal (20, 201, 202, 203, 204), pouvant être parcouru par le fluide, est formé chaque fois entre deux segments (21) juxtaposés.

2. Moteur à rotor humide selon la revendication 1, **caractérisé en ce que** le canal (20, 201, 202, 203, 204) est ouvert notamment sur toute sa largeur vers le palier d'arbre (16).

3. Moteur à rotor humide selon la revendication 1 ou 2, **caractérisé en ce que** le canal (20, 201, 202, 203, 204) s'étend par rapport à l'arbre (2) en direction radiale et/ou direction axiale sur toute l'étendue des deux segments (21) juxtaposés.

4. Moteur à rotor humide selon l'une des revendications précédentes, **caractérisé en ce qu'**un espace intermédiaire (19) formé entre bout d'arbre (15) et flasque (14) et/ou entre palier d'arbre (16) et flasque (14), et qui est notamment limité par les segments (21), est relié au canal (20, 201, 202, 203, 204).

5. Moteur à rotor humide selon la revendication 4, **caractérisé en ce que** plusieurs canaux (20, 201, 202, 203, 204) sont formés par les segments (21), **en ce qu'**au moins l'un des canaux (20) est un canal d'entrée (201) servant d'entrée dans l'espace intermédiaire (19) au fluide, et **en ce qu'**au moins l'un des canaux (20) est un canal de sortie (202, 203, 204) servant de sortie de l'espace intermédiaire (19) au fluide.

6. Moteur à rotor humide selon la revendication 5, **caractérisé en ce que** le canal de sortie (203) est disposé en alignement avec le canal d'entrée (201).

7. Moteur à rotor humide selon la revendication 5 ou 6, **caractérisé en ce que** le logement (17) présente quatre segments (21), **en ce que** quatre canaux (201, 202, 203, 204) sont formés par les quatre segments (21), et **en ce que** l'un des quatre canaux (20) est le canal d'entrée (201) et les trois autres canaux (20) sont des canaux de sortie (202, 203, 204).

8. Moteur à rotor humide selon l'une des revendications 5 à 7, **caractérisé en ce que** sur le flasque (14) et/ou sur au moins l'un des segments (21) formant le canal d'entrée (201) est disposé, notamment formé, un élément de renvoi (22) servant à renvoyer le fluide dans le canal d'entrée (201).

9. Moteur à rotor humide selon la revendication 8, **caractérisé en ce que** l'élément de renvoi (22) est disposé sur le flasque (14) au centre du canal d'entrée (201).

10. Moteur à rotor humide selon la revendication 9, **caractérisé en ce que** sur au moins l'un des segments (21) formant le canal d'entrée (201) est disposé, notamment formé, un élément de guidage (25) servant à conduire le fluide dans le canal d'entrée (201).

11. Moteur à rotor humide selon l'une des revendications 8 à 10, **caractérisé en ce que** l'élément de renvoi (22) présente au moins une paroi déflectrice (24) courbe permettant de renvoyer le fluide.

12. Moteur à rotor humide selon l'une des revendications précédentes, **caractérisé en ce que** les segments (21) sont adaptés pour fixer le palier d'arbre (16).

13. Moteur à rotor humide selon la revendication 12, **caractérisé en ce que** les segments (21) présentent, sur leur côté tourné vers le palier d'arbre (16), une encoche (28) destinée à recevoir une bague de serrage (18), laquelle bague permet de fixer le palier d'arbre (16).

14. Moteur à rotor humide selon l'une des revendications précédentes, **caractérisé en ce que** les segments (21) sont formés sur le flasque (14).

15. Moteur à rotor humide selon l'une des revendications précédentes, **caractérisé en ce que** le flasque (14) est formé d'un seul tenant avec un carter de rotor (4).

16. Moteur à rotor humide selon l'une des revendications précédentes, **caractérisé par** une chambre de rotor (5) laquelle est limitée par le flasque (14) et vers laquelle le canal (20, 201, 202, 203, 204) est ouvert.

17. Moteur à rotor humide selon l'une des revendications précédentes, **caractérisé par** un rotor (3) raccordé à une pompe d'un appareil ménager, notamment d'un lave-vaisselle, et qui tourne dans le fluide dans une chambre de rotor (5) qui est limitée par un flasque (14) fermé, lequel flasque présente le logement (17) pour monter l'arbre (2) du rotor (3).

18. Moteur à rotor humide selon la revendication 17, **caractérisé en ce que** dans le flasque (14) est montée le bout (15) de l'arbre (2) opposé à la pompe.
